(19) **Europäisches Patentamt European Patent Office Office européen des brevets**

(11) **EP 4 575 011 A1**

(12) **EUROPEAN PATENT APPLICATION**
published in accordance with Art. 153(4) EPC

(43) Date of publication:
**25.06.2025 Bulletin 2025/26**

(21) Application number: 23865296.0

(22) Date of filing: **31.08.2023**

(51) International Patent Classification (IPC):
*C21D 8/12* (2006.01)    *C21D 9/46* (2006.01)
*C22C 38/00* (2006.01)    *C22C 38/60* (2006.01)
*H01F 1/147* (2006.01)

(52) Cooperative Patent Classification (CPC):
**C21D 8/12; C21D 9/46; C22C 38/00; C22C 38/60;
H01F 1/147**

(86) International application number:
**PCT/JP2023/031709**

(87) International publication number:
**WO 2024/057940 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.09.2022 JP 2022145195**

(71) Applicant: **JFE Steel Corporation
Tokyo 100-0011 (JP)**

(72) Inventors:
• **SAITO Hayato
Tokyo 100-0011 (JP)**

• **TANAKA Takaaki
Tokyo 100-0011 (JP)**
• **OKUBO Tomoyuki
Tokyo 100-0011 (JP)**
• **SUEHIRO Ryuichi
Tokyo 100-0011 (JP)**
• **MARUYAMA Shigehiro
Tokyo 100-0011 (JP)**

(74) Representative: **Grünecker Patent- und
Rechtsanwälte
PartG mbB
Leopoldstraße 4
80802 München (DE)**

(54) **HIGH-STRENGTH NON-ORIENTED ELECTROMAGNETIC STEEL PLATE AND METHOD FOR MANUFACTURING SAME**

(57)    When producing a non-oriented electrical steel sheet by performing hot-rolling, hot-band annealing, cold rolling, and finishing annealing with regard to a steel slab containing, by mass %, C: 0.0050% or less, Si: 2.0 to 5.0%, Mn: 0.2 to 1.8%, Al: 0.5 to 2.5%, Mo: 0.001 to 0.100%, and Sn and Sb: 0.02 to 0.10% in total, in which the contents of Si, Al, and Mn satisfy a given relation, a soaking temperature in the finishing annealing is set to not lower than 500°C but not higher than a temperature T determined by the contents of Si, Al, and Mn, a cold-rolled sheet is held at the soaking temperature for a time period of no longer than 60 seconds, and a retention time at a temperature of 500°C or higher is no longer than 100 seconds, whereby a tensile strength of the steel sheet is 700 to 950 Mpa, and a dislocation density thereof in a central portion of the sheet thickness is $1.2 \times 10^{14}$ m$^{-2}$ or more, thus obtaining a non-oriented electrical steel sheet exhibiting a high strength after performing finishing annealing and a low iron loss after performing stress-relief annealing.

**EP 4 575 011 A1**

## Description

Technical Field

The present invention relates to a non-oriented electrical steel sheet that has high strength and exhibits low iron loss; and a method for manufacturing the same.

Background Art

In recent years, there has been a growing demand for energy-saving electrical equipment, and there is also a strong demand for improvements in the magnetic properties of non-oriented electrical steel sheets used in the iron cores of rotating machines. The iron core of a rotating machine is generally composed of a rotor (rotor core) and a stator (stator core). In the cases of large-diameter motors and high-revolution motors, the rotor core is subjected to large centrifugal forces so that the non-oriented electrical steel sheet (material steel sheet) used for the core is required to possess high strength. Meanwhile, the non-oriented electrical steel sheet used for the stator core is required to exhibit low iron loss.

Further, in terms of improving material yield and production efficiency, it is preferred that a rotor core material and a stator core material be able to be collected from the same non-oriented electrical steel sheet (material steel sheet); and in terms of reducing the iron loss of the stator core, it is preferred that iron loss be able to be lowered upon performing stress-relief annealing after assembling the core.

As a non-oriented electrical steel sheet having high strength, for example, proposed in Patent Literature 1 is a high-strength electrical steel sheet superior in magnetic properties, which has a chemical composition containing, by mass%, C: 0.060% or less, Si: 0.2 to 3.5%, Mn: 0.05 to 3.0%, P: 0.30% or less, S: 0.040% or less, Al: 2.50% or less, N: 0.020% or less, and a balance being Fe and inevitable impurities, in which a worked structure remains inside the steel material.

Further, proposed in Patent Literature 2 is an electrical steel sheet that has a chemical composition containing, by mass %, C: 0.005% or less, Si: more than 3.5% but 4.5% or less, Mn: 0.01 % or more but 0.10% or less, Al: 0.005% or less, Ca: 0.0010 or more but 0.0050% or less, S: 0.0030% or less, N: 0.0030% or less, and a balance being Fe and inevitable impurities, in which Ca and S satisfy Ca/S: 0.80 or more, the sheet thickness of the steel sheet is 0.40 mm or less, an unrecrystallized worked structure is present at a ratio of 10 to 70%, the tensile strength (TS) of the steel sheet is 600 MPa or more, and an iron loss $W_{10/400}$ of the steel sheet is 30 W/kg or less.

Citation List

Patent Literature

  Patent Literature 1: JP-A-2005-113185
  Patent Literature 2: JP-A-2012-149337

Summary of Invention

Technical Problem

However, according to the outcomes of studies conducted by the inventors, what was made clear is that there is a problem that while the techniques disclosed in Patent Literature 1 and Patent Literature 2 are able to obtain a high-strength non-oriented electrical steel sheet, the iron loss after performing stress-relief annealing is not necessarily favorable with these techniques.

The present invention was made in view of the aforementioned problem born by the conventional techniques. It is an object of the present invention to provide a non-oriented electrical steel sheet that has high strength after performing finishing annealing and has a property of exhibiting low iron loss after performing stress-relief annealing; and an advantageous method for producing such a non-oriented electrical steel sheet.

Solution to Problem

In order to solve the above problem, the inventors diligently conducted a series of studies focusing on the chemical composition of a steel and the production conditions thereof. As a result, the present invention was completed based on a finding that by controlling the temperature of finishing annealing performed on a cold-rolled sheet to an appropriate temperature in accordance with the chemical composition of the steel, there can be obtained a non-oriented electrical steel sheet that has high strength after performing finishing annealing and exhibits low iron loss after performing stress-relief annealing.

The present invention based on the above finding is a non-oriented electrical steel sheet having a chemical composition including C: 0.0050% by mass or less, Si: 2.0 to 5.0% by mass, Mn: 0.2 to 1.8% by mass, P: 0.020% by mass or less, S: 0.0050% by mass or less, Al: 0.5 to 2.5% by mass, N: 0.0050% by mass or less, Mo: 0.001 to 0.100% by mass, O: 0.0050% by mass or less, at least one of Sn and Sb: 0.02 to 0.10% by mass in total, and a balance being Fe and inevitable impurities, wherein when the contents (by mass%) of Si, Al, and Mn are expressed as [Si], [Al], and [Mn], respectively, these contents satisfy the following formula (1):

$$[Si] + [Al]/2.5 + [Mn]/4 \geq 2.72 \cdots (1);$$

a tensile strength of the steel sheet is 700 to 950 MPa; and a dislocation density in a central portion of a sheet thickness of the steel sheet is $1.2 \times 10^{14}$ m$^{-2}$ or more.

The non-oriented electrical steel sheet of the present invention is characterized by further containing Ge: 0.0005 to 0.0100% by mass in addition to the abovementioned chemical composition.

Moreover, the non-oriented electrical steel sheet of the present invention is characterized by further containing, in addition to the abovementioned chemical composition, a component(s) of at least one group selected from the following groups A to H,

group A: 0.001 to 0.010% by mass of Zn,
group B: 0.0001 to 0.0030% by mass of Pb,
group C: 0.0010 to 0.0080% by mass in total of at least one of Ca, Mg, and REM,
group D: 0.0005 to 0.0030% by mass in total of at least one of Ti, Nb, and V,
group E: 0.01 to 0.40% by mass in total of at least one of Cr, Cu, and Ni,
group F: 0.0003 to 0.0040% by mass of B,
group G: 0.0005 to 0.0200% by mass in total of at least one of Co, W, and Ta,
group H: at least one of 0.0005 to 0.0100 % by mass of Ga and 0.001 to 0.010 % by mass of As.

Further, the present invention provides a method for producing a non-oriented electrical steel sheet, including

hot rolling a steel slab having any of the above-described chemical compositions to form a hot-rolled sheet;
subjecting the hot-rolled sheet to hot-band annealing;
performing cold rolling once or twice or more with intermediate annealing between each rolling to obtain a cold-rolled sheet having a final sheet thickness; and
subjecting the cold-rolled sheet to finishing annealing,
wherein a soaking temperature in the finishing annealing is not lower than 500°C but not higher than a temperature T (°C) defined by the following formula (2), the soaking temperature is held for a time period of no longer than 60 seconds, and a time period during which the temperature of the cold-rolled sheet remains at 500°C or higher is no longer than 100 seconds.

$$T = 184 \times ([Si] + [Al]/2.5 + [Mn]/4) \cdots (2)$$

Advantageous Effect of Invention

According to the present invention, since a rotor core material with high strength and a stator core material with low iron loss can be collected from the same non-oriented electrical steel sheet, a high-performance motor core can be produced efficiently.

Description of Embodiments

In the beginning, described are the chemical composition of the non-oriented electrical steel sheet of the present invention and the reasons for its limitation.

C: 0.0050% by mass or less

C is a harmful element that worsens the iron loss properties by forming carbides; in the present invention, C is limited to 0.0050% by mass or less. Preferably, C is limited to 0.0035% by mass or less. While the lower limit of C is not specified herein, it is preferred that C be contained at about 0.0003% by mass in terms of suppressing an increase in decarburization cost in the steel making process.

Si: 2.0 to 5.0% by mass

Si is a critical element that has an effect of reducing the iron loss by increasing the specific resistance of steel. Further, Si also has an effect of increasing the strength of a steel sheet via solid-solution strengthening. In order to achieve these effects, the Si content needs to be 2.0% by mass or more. The Si content is preferably 2.8% or more. Meanwhile, the upper limit of the Si content is 5.0% by mass, because the Si content of more than 5.0% by mass will, for example, lead to a reduced saturated magnetic flux density and make production via rolling difficult. The Si content is preferably 3.8% by mass or less.

Mn: 0.2 to 1.8% by mass

As is the case with Si, Mn is also an element that is effective in reducing iron loss and achieving high strength. Further, Mn is also an element that improves hot workability. Thus, in the present invention, Mn is contained at 0.2% by mass or more. Preferably, Mn is contained at 0.3% by mass or more. Meanwhile, the upper limit of the Mn content is 1.8% by mass, because a Mn content of more than 1.8% by mass will degrade the iron loss properties due to the precipitation of Mn carbides. Preferably, the Mn content is 1.4% by mass or less.

P: 0.020% by mass or less

P is segregated in the grain boundary to thus cause the embrittlement of the steel sheet, thereby impairing rollability; the upper limit of the P content needs to be 0.020% by mass. Preferably, it is 0.015% by mass or less. P also contributes to increasing the strength of a steel sheet via solid-solution strengthening. In order to achieve the above effect, it is preferred that the P content be 0.005 % by mass or more.

S: 0.0050% by mass or less

S is a harmful element that degrades the iron loss properties by forming fine sulfides; in the present invention, the S content is limited to 0.0050% by mass or less. Preferably, it is limited to 0.0030% by mass or less.

Al: 0.5 to 2.5% by mass

As is the case with Si, Al has an effect of reducing the iron loss by increasing the specific resistance of steel. Further, Al also has an effect of increasing the strength of a steel sheet via solid-solution strengthening. In order to achieve these effects, Al needs to be contained at 0.5% by mass or more. Preferably, Al is contained at 0.7% by mass or more. Meanwhile, the upper limit of Al is 2.5% by mass, as an excessive addition will affect productivity by forming nitrides and oxides. Preferably, the Al content is 1.8 % by mass or less.

N: 0.0050% by mass or less

N is a harmful element that degrades the iron loss properties by inhibiting grain growth as a result of forming fine nitrides; N needs to be limited to 0.0050% by mass or less. Preferably, N is contained at 0.0030% by mass or less.

Mo: 0.001 to 0.100% by mass

Mo is an element required to increase the dislocation density after performing finishing annealing, and needs to be contained at 0.001% by mass or more. Meanwhile, if added at more than 0.100% by mass, carbides are formed during stress-relief annealing, whereby grain growth is inhibited, thus deteriorating magnetic properties after stress-relief annealing. For this reason, Mo is added in a range of 0.001 to 0.100% by mass. Here, in terms of further increasing the dislocation density, it is preferred that Mo be added at 0.003% by mass or more, more preferably 0.005% by mass or more. Meanwhile, in terms of further reducing the iron loss after performing stress-relief annealing, it is preferred that Mo be contained at 0.070% by mass or less.

O: 0.0050% by mass or less

O is a harmful element that degrades the iron loss properties by inhibiting grain growth as a result of forming oxides; O needs to be limited to 0.0050% by mass or less. Preferably, O is contained at 0.0030% by mass or less.

At least one of Sn and Sb: 0.02 to 0.10% by mass in total

Sn and Sb are both elements effective in improving magnetic properties via improvements in texture. Thus, it is required that at least one of Sn and Sb be contained at 0.02% by mass or more in total. Meanwhile, the upper limit thereof is 0.10% by mass in total, as excessive additions saturate the above effect.

$$[Si] + [Al]/2.5 + [Mn]/4 \geq 2.72$$

In the case of the non-oriented electrical steel sheet of the present invention, when the above contents (% by mass) of Si, Al, and Mn are expressed as [Si], [Al], and [Mn], respectively, these contents need to satisfy the following formula (1):

$$[Si] + [Al]/2.5 + [Mn]/4 \geq 2.72 \cdots (1)$$

The above formula (1) is a parameter indicating the difficulty of recovery and recrystallization during finishing annealing, i.e., the difficulty in lowering the dislocation density; with the above formula (1) being satisfied, by performing a later-described appropriate finishing annealing, a tensile strength after performing finishing annealing and a dislocation density in a central portion of the sheet thickness of the steel sheet after performing finishing annealing can be heightened to expected values. Here, it is preferred that the above contents satisfy the following formula (1').

$$[Si] + [Al]/2.5 + [Mn]/4 \geq 3.65 \cdots (1')$$

In addition to the above components, the non-oriented electrical steel sheet of the present invention may further contain Ge.

Ge: 0.0005 to 0.0100% by mass

Ge is an element that contributes to improving the iron loss properties by suppressing oxidizing and nitriding as a result of being segregated on the surface of the steel sheet and in the crystal grain boundary. Further, Ge has an effect of suppressing the lowering of dislocation density during finishing annealing that is performed under the conditions provided in the present invention, and heightening the tensile strength of a product sheet. In order to achieve the above effect, it is preferred that Ge be contained at 0.0005% by mass or more. Preferably, Ge is contained at 0.0008% by mass or more. Meanwhile, when Ge is added, it is preferably added at 0.0100% by mass or less, because if added at more than 0.0100% by mass, significant grain boundary segregation occurs, inhibiting grain growth and degrading the iron loss properties.
In addition to the above components, the non-oriented electrical steel sheet of the present invention may further contain a component(s) of at least one group selected from the following groups A to H.

Group A: 0.001 to 0.010% by mass of Zn

Zn is an element that contributes to achieving high strength by forming finer steel sheet structure (crystal grains). In order to achieve the above effect, it is preferred that Zn be contained at 0.001% by mass or more. Meanwhile, if Zn is added, it is preferably added at 0.010% by mass or less, because if added at more than 0.010% by mass, the iron loss properties degrade due to excessive formation of oxides.

Group B: 0.0001 to 0.0030% by mass of Pb

As is the case with Zn, Pb is an element that contributes to achieving high strength by forming finer crystal grains. In order to achieve the above effect, it is preferred that Pb be contained at 0.0001% by mass or more. Meanwhile, if Pb is added, it is preferably added at 0.0030% by mass or less, because if added at more than 0.0030% by mass, the iron loss properties degrade as grain growth is inhibited in stress-relief annealing.

Group C: at least one of Ca, Mg, and REM: 0.0010 to 0.0080% by mass in total

Ca, Mg, and REM are all elements that contribute to improving the iron loss properties by fixing S as sulfides. In order to achieve the above effect, it is preferred that at least one of them be added at 0.0010% by mass or more in total. Meanwhile, the upper limit thereof is preferably 0.0080% by mass, because if added at more than 0.0080% by mass, inclusions are formed, which affects productivity. More preferably, the above element(s) are added in a range of 0.0020 to 0.0050% by mass in total.

Group D: at least one of Ti, Nb, and V: 0.0005 to 0.0030% by mass in total

Ti, Nb, and V are all elements that are effective in increasing the strength of a steel sheet via precipitation strengthening and crystal grain refinement. In order to achieve the above effect, it is preferred that at least of them be added at 0.0005% by mass or more in total. Meanwhile, the upper limit thereof is preferably 0.0030% by mass, because if added at more than 0.0030% by mass, the iron loss properties degrade as grain growth is significantly inhibited.

Group E: at least one of Cr, Cu, and Ni: 0.01 to 0.40% by mass in total

Cr, Cu, and Ni all have an effect of improving the iron loss properties by increasing the specific resistance of a steel sheet. In order to achieve the above effect, it is preferred that at least one of them be added at 0.01% by mass or more in total. However, the upper limit thereof is preferably 0.40% by mass, since an excessive addition degrades the iron loss properties by forming carbides, thereby deteriorating the surface properties. More preferably, the above element(s) are added in a range of 0.03 to 0.15% by mass in total.

Group F: B: 0.0003 to 0.0040% by mass

B is an element that contributes to achieving high strength by finely granulating the crystal grains. In order to achieve the above effect, it is preferred that B be added at 0.0003% by mass or more. Meanwhile, the upper limit of B is preferably 0.0040% by mass, because if added at more than 0.0040% by mass, not only the above effect will be saturated, but iron loss will also worsen as borides are excessively generated.

Group G: at least one of Co, W, and Ta: 0.0005 to 0.0200% by mass in total

Co, W, and Ta are all elements that form precipitates and contribute to achieving high strength via crystal grain refinement and a dispersing effect of the precipitates. In order to achieve the above effect, it is preferred that at least one of these elements be added at 0.0005% by mass or more in total. Meanwhile, the upper limit thereof is preferably 0.0200% by mass, because if added at more than 0.0200% by mass in total, the iron loss properties degrades as grain growth is significantly inhibited. More preferably, the above element(s) are added in a range of 0.0010 to 0.0100% by mass.

Group H: at least one of Ga: 0.0005 to 0.0100% by mass and As: 0.001 to 0.010% by mass

Ga and As are both elements that contribute to improving the iron loss properties by suppressing oxidizing and nitriding as a result of being segregated on the surface of the steel sheet and in the crystal grain boundary. In order to achieve the above effect, it is preferred that Ga be contained at 0.0005% by mass or more, and that As be contained at 0.001% by mass or more. Preferably, Ga is at 0.0008% by mass or more, and As is at 0.002% by mass or more. Meanwhile, if Ga and/or As are added, it is preferred that Ga be added at 0.0100% by mass or less, and that As be added at 0.010% by mass. This is because if Ga is added at more than 0.0100% by mass and As is added at more than 0.010% by mass, significant grain boundary segregation occurs, inhibiting grain growth degrading the iron loss properties.
As for the non-oriented electrical steel sheet of the present invention, the balance thereof other than the above components is composed of Fe and inevitable impurities.
Next, a method for producing the non-oriented electrical steel sheet of the present invention is described.
The non-oriented electrical steel sheet of the present invention is produced by producing a steel material (slab) having the above component composition and hot rolling the slab to form a hot-rolled sheet with a given sheet thickness. Next, after subjecting the hot-rolled sheet to hot-band annealing, pickling is performed, followed by carrying out cold rolling either once or twice or more with intermediate annealing being conducted between each cold rolling, thereby obtaining a cold-rolled sheet having a final sheet thickness, and conducting finishing annealing to produce the steel sheet of the present invention. The method is described in detail hereunder.

Steel material (slab)

There are no particular restrictions on a method for producing a slab serving as a steel material used in the production of the non-oriented electrical steel sheet. For example, a steel having the aforementioned chemical composition is produced via a commonly known refining process using, for example, a converter or electric furnace, and a vacuum degassing apparatus. Next, the steel thus produced may be processed into a steel material via, for example, a continuous casting method, an ingot making-blooming method, or a thin slab continuous casting method. Here, as a raw material, there may be used iron scrap and direct reduced iron.

Hot rolling

Next, after being heated to a given temperature, the above slab is then hot-rolled into a hot-rolled sheet with a given sheet thickness. While there are no particular restrictions on the conditions for performing hot rolling, it is preferred that the heating temperature of the slab be in a range of 1,000 to 1,150°C. Further, the coil winding temperature after carrying out hot rolling is preferably in a range of 500 to 700°C.

Hot-band annealing

The steel sheet that has been hot-rolled (hot-rolled sheet) is subjected to hot-band annealing. It is preferred that this hot-band annealing be performed by holding the temperature of the sheet at 800 to 1,000°C for 5 to 300 seconds. Here, a coarse steel sheet structure (crystal grains) after the hot-band annealing is performed causes a region(s) to be formed which intensively shows strains such as a deformation band and shear band in cold rolling after pickling, facilitating recrystallization such that the dislocation density is easy to decrease. Thus, the temperature for hot-band annealing is preferably 950°C or lower. A temperature of 920°C or lower is more preferred.

Pickling

The hot-rolled sheet that has been subjected to the hot-band annealing is pickled to remove scales by a common method. The pickling may simply be performed under conditions that allows the scale to be removed to the extent that the steel sheet is able to be subjected to cold rolling which is the next step; for example, there may be employed common pickling conditions using hydrochloric acid, sulfuric acid or the like. Further, in order to promote scale removal, there may be additionally performed, for example, mechanical descaling where cracks are to be formed on the scale via shot blasting, low-force rolling or the like, either before or during performing pickling.

Cold rolling

The pickled hot-rolled sheet is then cold-rolled and formed into a cold-rolled sheet having a final sheet thickness (product sheet thickness). There are no particular restrictions on such cold rolling so long as the final sheet thickness can be achieved. Further, cold rolling may be performed not only once, but twice or more if necessary with intermediate annealing being conducted between each rolling. The intermediate annealing conditions in such case may be common conditions, and there are no particular restrictions imposed thereon. However, during the above cold rolling, the rolling reduction in the cold rolling for forming the sheet into the final sheet thickness is preferably 50% or more, because an excessively low rolling reduction will result in an insufficient work hardening, whereby the strength after performing finishing annealing may be lower than an expected value. A rolling reduction of 70% or more is more preferred.

Finishing annealing

Next, the cold-rolled sheet with the final sheet thickness is subjected to finishing annealing. This finishing annealing is a step to impart given strength and magnetic properties to the cold-rolled sheet and is a particularly critical step in the present invention. In order to impart strength (tensile strength: 700 MPa or more) expected by the present invention to the cold-rolled sheet, the soaking temperature of the finishing annealing needs to be a temperature not higher than a temperature T defined by the following formula (2), and the finishing annealing needs to be performed in such a manner that this temperature is held for a time period (soaking time) of no longer than 60 seconds.

$$T = 184 \times ([Si] + [Al]/2.5 + [Mn]/4) \cdots (2)$$

wherein [Si], [Al], and [Mn] represent the contents of Si, Al, and Mn in the steel sheet, respectively. Here, the temperature T defined by the formula (2) is a parameter indicating a softening temperature at which the tensile strength decreases as the dislocation density decreases. By satisfying the above conditions, the tensile strength of the steel sheet after performing finishing annealing can be 700MPa or more, and the dislocation density thereof in the central portion of the sheet thickness can be $1.2\times10^{14}$ m$^{-2}$ or more. However, when the soaking temperature of the finishing annealing is higher than the temperature T defined by the formula (2), or when the soaking time is longer than 60 seconds, the dislocation density in the steel sheet will rapidly decrease, thereby making it impossible to achieve the aforementioned tensile strength. Here, in the formula (2), the index of the softening temperature is obtained from the contents of Si, Al and Mn; this is because, in the scope of the present invention, it will suffice to just take into consideration the additive amounts of Si, Al, and Mn which are the main additive elements.

However, the soaking temperature of the finishing annealing needs to be 500°C or higher, because if the soaking temperature is lower than 500°C, recovery will take place in an insufficient manner whereby the tensile strength will exceed 950 MPa and a punching workability will thus be impaired. A soaking temperature of 600°C or higher is preferred. For a similar reason, it is also preferred that the soaking time be 5 seconds or longer.

Further, it is essential that in the finishing annealing, a period of time during which the sheet is held at a temperature of 500°C or higher does not exceed 100 seconds. If the sheet is held even in the temperature range of 500°C or higher for a long period of time, the dislocation density will excessively decrease such that the expected tensile strength cannot be achieved. It is preferred that the holding time be no longer than 60 seconds.

An insulation coating is then formed, if necessary, on the steel sheet that has been subjected to the above finishing annealing to produce the steel sheet into a product sheet.

The steel sheet properties of the non-oriented electrical steel sheet of the present invention will be described.

Tensile strength: 700 to 950 MPa

In order for the rotor core of a large-size or high-speed rotating motor to secure a sufficient durability, it is required that the steel sheet have a tensile strength of 700 MPa or more after being subjected to finishing annealing. However, the upper limit of the tensile strength is set to 950 MPa, because an excessively high tensile strength will lead to an impaired punching workability. Preferably, the tensile strength is in the range of 730 to 860 MPa.

Dislocation density in central portion of sheet thickness: $1.2\times10^{14}$ m$^{-2}$ or more

Further, in the case of the non-oriented electrical steel sheet of the present invention, by employing the above chemical composition of the steel and performing finishing annealing under conditions that are in accordance with such chemical composition, the dislocation density in the central portion of the sheet thickness of the steel sheet needs to be $2\times10^{14}$ m$^{-2}$ or more. In this way, the aforementioned high tensile strength can be reliably secured. A preferable dislocation density is $3.0\times10^{14}$ m$^{-2}$ or more. Here, such dislocation density can be obtained in such a manner where the surface on one side of the steel sheet is subjected to mechanical polishing and chemical polishing so as to reduce the sheet thickness to 1/2, followed by performing X-ray diffraction on such polished surface (surface parallel to the surface of the steel sheet) to measure the half-value widths of the peaks, and then using the Williamson-Hall method to calculate the dislocation density.

Iron loss properties after stress-relief annealing

The non-oriented electrical steel sheet of the present invention is characterized by exhibiting excellent iron loss properties after performing stress-relief annealing. Here, the iron loss properties after performing stress-relief annealing is also affected by the conditions of stress-relief annealing. Such stress-relief annealing is usually performed at 700 to 900°C for 1 to 2 hours under a non-oxidizing or reducing atmosphere. However, it is difficult to evaluate magnetic properties if the conditions of stress-relief annealing are defined in the above ranges. Here, in the present invention, post-stress-relief annealing magnetic properties evaluation is performed in such a way that evaluated is magnetic properties after performing a heat treatment at 800°C for 2 hours under a $N_2$ atmosphere, simulating stress-relief annealing. In addition, it is needless to say that the conditions of stress-relief annealing to which an actual stator core is subjected may differ from the conditions described above.

Further, since the iron loss value of a steel sheet largely depends on the sheet thickness thereof, a reference value by which the quality of iron loss is determined needs to be set per sheet thickness. Here, in the present invention, as such reference value(s), they are set to $W_{10/400}$: 10.3 W/kg when the sheet thickness is 0.20 mm, $W_{10/400}$: 11.5 W/kg when the sheet thickness is 0.25 mm, $W_{10/400}$: 14.7 W/kg when the sheet thickness is 0.35 mm, and $W_{10/400}$: 22.5 W/kg when the sheet thickness is 0.50 mm; a material is thus evaluated as being able to be favorably used as a stator core material if its iron loss is not larger than these reference values.

Examples

A steel with a chemical composition containing the various components shown in Table 1 and a balance being Fe and inevitable impurities was produced by a refining process according to a common method, followed by performing a continuous casting method to obtain a slab. Such slab was then heated to a temperature of 1,100°C for 30 min in a gas furnace, followed by performing hot rolling which was composed of rough rolling and finish rolling, thereby obtaining a hot-rolled sheet having a sheet thickness of 1.8 mm. Later, after subjecting the hot-rolled sheet to hot-band annealing under a condition of 920°C for 30 seconds, the sheet was pickled and then cold rolled into a cold-rolled sheet having a final sheet thickness of 0.25 mm, followed by performing finishing annealing under the conditions shown in Table 2 so as to obtain a product sheet.

[Table 1-1]

| Steel No. | Chemical Composition (mass%) | | | | | | | | | | | | | Left-hand Side of Formula (1) | Temperature T(°C) | Remarks |
|---|---|---|---|---|---|---|---|---|---|---|---|---|---|---|---|---|
| | C | Si | Mn | P | S | Al | N | O | Mo | Sn | Sb | Ge | Others | | | |
| 1 | 0.0026 | 3.4 | 0.8 | 0.012 | 0.0014 | 1.4 | 0.0023 | 0.0012 | 0.005 | 0.04 | - | - | - | 4.16 | 765 | Invention Steel |
| 2 | 0.0014 | 3.3 | 1.8 | 0.008 | 0.0023 | 0.6 | 0.0030 | 0.0014 | 0.008 | - | 0.05 | - | - | 3.99 | 734 | Invention Steel |
| 3 | 0.0023 | 3.8 | 0.8 | 0.018 | 0.0031 | 0.7 | 0.0019 | 0.0023 | 0.002 | 0.02 | 0.08 | - | - | 4.28 | 788 | Invention Steel |
| 4 | 0.0033 | 3.5 | 0.6 | 0.005 | 0.0018 | 1.5 | 0.0019 | 0.0020 | 0.015 | 0.03 | - | - | Ca:0.0024 | 4.25 | 782 | Invention Steel |
| 5 | 0.0027 | 3.0 | 1.4 | 0.009 | 0.0033 | 1.0 | 0.0024 | 0.0027 | 0.004 | 0.04 | - | - | Mg:0.0032 | 3.75 | 690 | Invention Steel |
| 6 | 0.0018 | 3.2 | 0.6 | 0.011 | 0.0012 | 0.9 | 0.0019 | 0.0024 | 0.013 | 0.02 | 0.02 | - | REM:0.0039 | 3.71 | 683 | Invention Steel |
| 7 | 0.0022 | 3.2 | 1.2 | 0.014 | 0.0021 | 1.2 | 0.0031 | 0.0025 | 0.003 | 0.04 | - | - | Ti:0.0012 | 3.98 | 732 | Invention Steel |
| 8 | 0.0041 | 3.2 | 1.0 | 0.011 | 0.0018 | 2.5 | 0.0017 | 0.0024 | 0.010 | - | 0.04 | - | Nb:0.0028 | 4.45 | 819 | Invention Steel |
| 9 | 0.0022 | 3.0 | 0.6 | 0.014 | 0.0028 | 0.8 | 0.0019 | 0.0019 | 0.010 | - | 0.03 | - | V:0.0024 | 3.47 | 638 | Invention Steel |
| 10 | 0.0025 | 3.4 | 0.3 | 0.006 | 0.0025 | 0.7 | 0.0008 | 0.0021 | 0.020 | 0.02 | 0.02 | - | Cr:0.15 | 3.76 | 691 | Invention Steel |
| 11 | 0.0029 | 3.4 | 0.2 | 0.015 | 0.0016 | 1.8 | 0.0020 | 0.0019 | 0.050 | 0.03 | - | - | - | 4.17 | 767 | Invention Steel |
| 12 | 0.0014 | 3.3 | 0.5 | 0.013 | 0.0029 | 1.2 | 0.0022 | 0.0026 | 0.009 | 0.03 | 0.01 | - | Cu:0.07 | 3.91 | 719 | Invention Steel |
| 13 | 0.0023 | 3.8 | 0.6 | 0.009 | 0.0022 | 2.0 | 0.0022 | 0.0016 | 0.030 | - | 0.05 | - | Ni:0.12 | 4.75 | 874 | Invention Steel |

(continued)

| Steel No. | Chemical Composition (mass%) | | | | | | | | | | | | | Left-hand Side of Formula (1) | Temperature T(°C) | Remarks |
|---|---|---|---|---|---|---|---|---|---|---|---|---|---|---|---|---|
| | C | Si | Mn | P | S | Al | N | O | Mo | Sn | Sb | Ge | Others | | | |
| 14 | 0.0016 | 3.2 | 1.0 | 0.013 | 0.0008 | 0.5 | 0.0024 | 0.0017 | 0.035 | 0.02 | - | - | Cu:0.08, Ni:0.06 | 3.65 | 672 | Invention Steel |
| 15 | 0.0047 | 2.8 | 0.8 | 0.013 | 0.0012 | 1.5 | 0.0020 | 0.0013 | 0.055 | 0.05 | - | - | B:0.0011 | 3.60 | 662 | Invention Steel |
| 16 | 0.0026 | 3.2 | 0.8 | 0.012 | 0.0036 | 0.8 | 0.0031 | 0.0013 | 0.005 | - | 0.01 | - | - | 3.72 | 684 | Comparative Steel |
| 17 | 0.0021 | 3.4 | 0.8 | 0.012 | 0.0015 | 0.3 | 0.0024 | 0.0014 | 0.004 | 0.04 | - | - | - | 3.72 | 684 | Comparative Steel |
| 18 | 0.0031 | 3.4 | 0.7 | 0.008 | 0.0012 | 1.4 | 0.0028 | 0.0015 | - | 0.04 | - | - | - | 4.14 | 761 | Comparative Steel |
| 19 | 0.0023 | 3.4 | 0.6 | 0.014 | 0.0007 | 1.2 | 0.0021 | 0.0009 | 0.005 | 0.03 | - | - | Co:0.004 | 4.03 | 742 | Invention Steel |
| 20 | 0.0004 | 3.4 | 0.5 | 0.012 | 0.0011 | 1.0 | 0.0009 | 0.0014 | 0.006 | 0.02 | 0.01 | - | W:0.002 | 3.93 | 722 | Invention Steel |
| 21 | 0.0028 | 3.2 | 1.0 | 0.010 | 0.0017 | 1.6 | 0.0026 | 0.0006 | 0.012 | 0.01 | 0.02 | - | Ta:0.003 | 4.09 | 753 | Invention Steel |
| 22 | 0.0031 | 3.2 | 0.8 | 0.010 | 0.0014 | 1.6 | 0.0014 | 0.0026 | 0.009 | 0.03 | - | - | Co:0.003, W:0.001 | 4.04 | 743 | Invention Steel |
| 23 | 0.0019 | 3.5 | 0.4 | 0.008 | 0.0024 | 1.0 | 0.0016 | 0.0021 | 0.006 | - | 0.03 | 0.0007 | - | 4.00 | 736 | Invention Steel |
| 24 | 0.0008 | 3.4 | 0.8 | 0.013 | 0.0019 | 0.8 | 0.0025 | 0.0013 | 0.004 | 0.04 | - | - | Zn:0.002 | 3.92 | 721 | Invention Steel |
| 25 | 0.0017 | 3.4 | 0.3 | 0.014 | 0.0021 | 1.4 | 0.0023 | 0.0012 | 0.013 | 0.04 | - | - | Pb:0.0003 | 4.04 | 742 | Invention Steel |
| 26 | 0.0026 | 1.9 | 0.8 | 0.012 | 0.0014 | 1.4 | 0.0023 | 0.0012 | 0.005 | 0.04 | - | - | - | 2.66 | 489 | Comparative Steel |

EP 4 575 011 A1

(continued)

| Steel No. | Chemical Composition (mass%) | | | | | | | | | | | | | Left-hand Side of Formula (1) | Temperature T(°C) | Remarks |
|---|---|---|---|---|---|---|---|---|---|---|---|---|---|---|---|---|
| | C | Si | Mn | P | S | Al | N | O | Mo | Sn | Sb | Ge | Others | | | |
| 27 | 0.0023 | 3.4 | 0.6 | 0.01 | 0.0016 | 0.8 | 0.0028 | 0.0016 | 0.005 | 0.04 | - | - | Ga:0.0008 | 3.87 | 712 | Invention Steel |
| 28 | 0.0018 | 3.2 | 0.8 | 0.008 | 0.0013 | 1.0 | 0.0021 | 0.0012 | 0.005 | 0.03 | 0.02 | - | As:0.003 | 3.80 | 699 | Invention Steel |

[Table 1-2]

| Steel No. | Chemical Composition (mass%) | | | | | | | | | | | | | Left-hand Side of Formula (1) | Temperature T(°C) | Remarks |
|---|---|---|---|---|---|---|---|---|---|---|---|---|---|---|---|---|
| | C | Si | Mn | P | S | Al | N | O | Mo | Sn | Sb | Ge | Others | | | |
| 29 | 0.0023 | 3.5 | 0.8 | 0.012 | 0.0021 | 0.6 | 0.0022 | 0.0017 | 0.008 | 0.04 | - | 0.0010 | Ca:0.0026 | 3.94 | 725 | Invention Steel |
| 30 | 0.0022 | 3.5 | 0.5 | 0.016 | 0.0024 | 1.2 | 0.0014 | 0.0021 | 0.005 | 0.04 | - | 0.0005 | Mg:0.0012 | 4.11 | 755 | Invention Steel |
| 31 | 0.0013 | 3.4 | 0.7 | 0.012 | 0.0031 | 1.4 | 0.0010 | 0.0013 | 0.011 | 0.02 | 0.01 | 0.0015 | REM:0.0010 | 4.14 | 761 | Invention Steel |
| 32 | 0.0011 | 3.6 | 1.2 | 0.013 | 0.0026 | 0.8 | 0.0025 | 0.0012 | 0.008 | 0.03 | - | 0.0008 | Ti:0.0023 | 4.22 | 776 | Invention Steel |
| 33 | 0.0016 | 3.6 | 1.5 | 0.013 | 0.0017 | 0.8 | 0.0024 | 0.0017 | 0.007 | 0.04 | - | 0.0007 | Nb:0.0005 | 4.30 | 790 | Invention Steel |
| 34 | 0.0008 | 3.4 | 0.6 | 0.006 | 0.0016 | 0.8 | 0.0021 | 0.0026 | 0.005 | 0.06 | - | 0.0035 | V:0.0020 | 3.87 | 712 | Invention Steel |
| 35 | 0.0031 | 3.2 | 0.6 | 0.006 | 0.0004 | 1.2 | 0.0008 | 0.0021 | 0.005 | - | 0.05 | 0.0020 | Cr:0.21 | 3.83 | 705 | Invention Steel |
| 36 | 0.0025 | 3.7 | 0.8 | 0.012 | 0.0006 | 1.2 | 0.0011 | 0.0014 | 0.008 | 0.03 | - | 0.0100 | Cu:0.16 | 4.38 | 806 | Invention Steel |
| 37 | 0.0026 | 3.8 | 0.8 | 0.018 | 0.0012 | 0.6 | 0.0023 | 0.0016 | 0.008 | 0.04 | - | 0.0006 | Ni:0.08 | 4.24 | 780 | Invention Steel |
| 38 | 0.0031 | 3.5 | 0.8 | 0.013 | 0.0013 | 0.6 | 0.0018 | 0.0008 | 0.008 | 0.04 | - | 0.0040 | Cu:0.12, Ni:0.06 | 3.94 | 725 | Invention Steel |
| 39 | 0.0018 | 3.4 | 0.5 | 0.01 | 0.0018 | 0.6 | 0.0017 | 0.0012 | 0.005 | - | 0.03 | 0.0063 | B:0.0006 | 3.77 | 693 | Invention Steel |
| 40 | 0.0016 | 3.4 | 0.5 | 0.012 | 0.0009 | 0.8 | 0.0024 | 0.0014 | 0.003 | 0.05 | - | 0.0007 | Co:0.002 | 3.85 | 707 | Invention Steel |
| 41 | 0.0015 | 3.5 | 0.6 | 0.01 | 0.0008 | 0.4 | 0.0024 | 0.0016 | 0.004 | 0.01 | 0.03 | 0.0005 | W:0.001 | 3.81 | 701 | Invention Steel |
| 42 | 0.0024 | 3.5 | 0.6 | 0.007 | 0.0021 | 0.4 | 0.0026 | 0.0021 | 0.004 | 0.04 | - | 0.0016 | Ta:0.004 | 3.81 | 701 | Invention Steel |

(continued)

| Steel No. | Chemical Composition (mass%) | | | | | | | | | | | | | Left-hand Side of Formula (1) | Temperature T(°C) | Remarks |
|---|---|---|---|---|---|---|---|---|---|---|---|---|---|---|---|---|
| | C | Si | Mn | P | S | Al | N | O | Mo | Sn | Sb | Ge | Others | | | |
| 43 | 0.0023 | 3.6 | 0.7 | 0.006 | 0.0026 | 0.6 | 0.0018 | 0.0014 | 0.006 | 0.02 | 0.02 | 0.0021 | Zn:0.005 | 4.02 | 739 | Invention Steel |
| 44 | 0.0027 | 3.2 | 0.7 | 0.014 | 0.0022 | 0.8 | 0.0021 | 0.0016 | 0.016 | 0.03 | - | 0.0008 | Pb:0.0004 | 3.70 | 680 | Invention Steel |
| 45 | 0.0018 | 3.4 | 0.8 | 0.012 | 0.0018 | 1.4 | 0.0012 | 0.0017 | 0.030 | 0.04 | - | 0.0006 | Ga:0.0006 | 4.16 | 765 | Invention Steel |
| 46 | 0.0014 | 3.4 | 0.8 | 0.013 | 0.0017 | 0.8 | 0.0013 | 0.0019 | 0.020 | 0.04 | - | 0.0007 | As:0.002 | 3.92 | 721 | Invention Steel |
| 47 | 0.0013 | 3.5 | 0.5 | 0.008 | 0.0015 | 0.8 | 0.0021 | 0.0014 | 0.006 | 0.04 | - | 0.0006 | Ca:0.0032, Ti:0.0018, Cr:0.02 | 3.95 | 726 | Invention Steel |
| 48 | 0.0014 | 3.5 | 0.5 | 0.009 | 0.0012 | 0.8 | 0.0034 | 0.0016 | 0.004 | 0.04 | - | 0.0005 | Co:0.003, Cu:0.25 | 3.95 | 726 | Invention Steel |
| 49 | 0.0022 | 3.5 | 0.5 | 0.012 | 0.0014 | 0.8 | 0.0016 | 0.0017 | 0.005 | 0.04 | - | 0.0008 | Zn:0.003, Co:0.002 | 3.95 | 726 | Invention Steel |
| 50 | 0.0018 | 3.5 | 0.5 | 0.015 | 0.0016 | 0.8 | 0.0014 | 0.0009 | 0.002 | 0.04 | - | 0.0020 | Pb:0.0004, Ni:0.05 | 3.95 | 726 | Invention Steel |
| 51 | 0.0013 | 3.5 | 0.5 | 0.014 | 0.0008 | 0.8 | 0.0026 | 0.0012 | 0.011 | 0.04 | - | 0.0013 | Pb:0.0004, B:0.0005 | 3.95 | 726 | Invention Steel |
| 52 | 0.0017 | 3.5 | 0.5 | 0.007 | 0.0007 | 0.8 | 0.0023 | 0.0011 | 0.031 | 0.04 | - | 0.0006 | Cu:0.04, Cr:0.02, B:0.0003 | 3.95 | 726 | Invention Steel |
| 53 | 0.0016 | 3.5 | 0.5 | 0.014 | 0.0016 | 0.8 | 0.0017 | 0.0018 | 0.008 | 0.04 | - | 0.0007 | Cu:0.15, Co:0.004, Ga:0.010 | 3.95 | 726 | Invention Steel |
| 54 | 0.0013 | 3.5 | 0.5 | 0.013 | 0.0024 | 0.8 | 0.0023 | 0.0013 | 0.040 | 0.04 | - | 0.0010 | Ti:0.0023, B:0.0004 | 3.95 | 726 | Invention Steel |
| 55 | 0.0026 | 3.5 | 0.5 | 0.010 | 0.0034 | 0.8 | 0.0009 | 0.0014 | 0.012 | 0.04 | - | 0.0017 | Pb:0.0005, Mg:0.0026, As:0.004 | 3.95 | 726 | Invention Steel |
| 56 | 0.0008 | 3.5 | 0.5 | 0.018 | 0.0018 | 0.8 | 0.0012 | 0.0017 | 0.008 | 0.04 | - | 0.0011 | Zn:0.003,Pb:0.0002,Ca:0.0036,Ti:0.0016,Cu:0.06, Cr:0.02, B:0.0003, Co:0.007, Ga:0.009, As:0.004 | 3.95 | 726 | Invention Steel |

14

[Table 2-1]

| Steel Sheet No. | Steel No. | Finishing Annealing Conditions | | | | Strength Properties | | Iron Loss W $_{10/400}$(W/kg) | | Remarks |
|---|---|---|---|---|---|---|---|---|---|---|
| | | Temperature T (°C) | Annealing Temperature(°C) | Annealing Time (s) | Retention time (s) at 500°C or higher | Tensile Strength (MPa) | Dislocation Density ($\times 10^{14}$m$^{-2}$) | After Finishing Annealing | After Stress-Relief Annealing | |
| 1 | 1 | 765 | 720 | 15 | 40 | 730 | 3.5 | 26.5 | 10.6 | Invention Example |
| 2 | 2 | 734 | 690 | 10 | 30 | 745 | 5.5 | 28.6 | 10.7 | Invention Example |
| 3 | 3 | 788 | 750 | 10 | 30 | 725 | 2.8 | 22.3 | 10.0 | Invention Example |
| 4 | 4 | 782 | 740 | 10 | 35 | 740 | 3.2 | 21.6 | 10.3 | Invention Example |
| 5 | 5 | 690 | 690 | 10 | 35 | 700 | 4.0 | 29.4 | 11.0 | Invention Example |
| 6 | 6 | 683 | 650 | 10 | 35 | 735 | 5.3 | 32.4 | 10.9 | Invention Example |
| 7 | 7 | 732 | 700 | 30 | 90 | 750 | 5.2 | 28.3 | 10.7 | Invention Example |
| 8 | 8 | 819 | 780 | 10 | 30 | 790 | 3.9 | 30.1 | 11.2 | Invention Example |
| 9 | 9 | 638 | 600 | 10 | 25 | 930 | 13.3 | 42.1 | 11.3 | Invention Example |
| 10 | 10 | 691 | 670 | 10 | 30 | 710 | 3.8 | 27.2 | 10.5 | Invention Example |
| 11 | 11 | 767 | 750 | 10 | 30 | 725 | 2.5 | 19.2 | 10.9 | Invention Example |
| 12 | 12 | 719 | 700 | 10 | 30 | 730 | 4.3 | 26.5 | 10.5 | Invention Example |
| 13 | 13 | 874 | 800 | 10 | 30 | 860 | 6.1 | 23.6 | 10.1 | Invention Example |
| 14 | 14 | 672 | 650 | 10 | 30 | 790 | 8.9 | 37.9 | 10.8 | Invention Example |
| 15 | 15 | 662 | 650 | 10 | 30 | 765 | 7.8 | 43.3 | 11.3 | Invention Example |
| 16 | 16 | 684 | 670 | 10 | 30 | 710 | 6.2 | 38.6 | 12.3 | Comparative Example |
| 17 | 17 | 684 | 670 | 10 | 30 | 700 | 5.5 | 37.9 | 11.8 | Comparative Example |
| 18 | 18 | 761 | 720 | 15 | 40 | 685 | 1.0 | 24.7 | 11.2 | Comparative Example |
| 19 | 1 | 765 | 980 | 10 | 30 | 640 | 0.9 | 11.2 | 11.2 | Comparative Example |
| 20 | 1 | 765 | 800 | 10 | 30 | 670 | 1.1 | 17.6 | 11.6 | Comparative Example |
| 21 | 19 | 742 | 710 | 10 | 30 | 720 | 3.2 | 26.1 | 10.5 | Invention Example |
| 22 | 20 | 722 | 680 | 10 | 30 | 710 | 3.2 | 29.2 | 10.7 | Invention Example |
| 23 | 21 | 753 | 700 | 10 | 30 | 740 | 3.8 | 27.0 | 10.6 | Invention Example |

(continued)

| Steel Sheet No. | Steel No. | Finishing Annealing Conditions | | | | Strength Properties | | Iron Loss W $_{10/400}$ (W/kg) | | Remarks |
|---|---|---|---|---|---|---|---|---|---|---|
| | | Temperature T (°C) | Annealing Temperature(°C) | Annealing Time (s) | Retention time (s) at 500°C or higher | Tensile Strength (MPa) | Dislocation Density ($\times 10^{14} m^{-2}$) | After Finishing Annealing | After Stress-Relief Annealing | |
| 24 | 22 | 743 | 700 | 10 | 30 | 720 | 3.0 | 27.4 | 10.9 | Invention Example |
| 25 | 23 | 736 | 700 | 10 | 30 | 730 | 3.1 | 26.6 | 10.6 | Invention Example |
| 26 | 24 | 721 | 670 | 10 | 30 | 725 | 4.1 | 30.4 | 10.8 | Invention Example |
| 27 | 25 | 742 | 720 | 10 | 30 | 720 | 2.8 | 25.4 | 10.4 | Invention Example |
| 28 | 1 | 765 | 720 | 15 | 110 | 675 | 1.0 | 25.3 | 11.9 | Comparative Example |
| 29 | 26 | 489 | 500 | 10 | 30 | 1080 | 18.3 | 54.7 | 13.4 | Comparative Example |
| 30 | 27 | 712 | 690 | 10 | 30 | 720 | 4.0 | 28.1 | 10.4 | Invention Example |
| 31 | 28 | 699 | 680 | 10 | 30 | 715 | 4.1 | 29.4 | 10.6 | Invention Example |

[Table 2-2]

| Steel Sheet No. | Steel No. | Finishing Annealing Conditions | | | | Strength Properties | | Iron Loss $W_{10/400}$ (W/kg) | | Remarks |
|---|---|---|---|---|---|---|---|---|---|---|
| | | Temperature T(°C) | Annealing Temperature (°C) | Annealing Time(s) | Retention time(s) at 500°C or higher | Tensile Strength (MPa) | Dislocation Density ($\times 10^{14}$ m$^{-2}$) | After Finishing Annealing | After Stress-relief Annealing | |
| 32 | 29 | 725 | 700 | 10 | 30 | 740 | 4.4 | 26.8 | 10.3 | Invention Example |
| 33 | 30 | 755 | 720 | 10 | 30 | 760 | 4.1 | 24.6 | 10.2 | Invention Example |
| 34 | 31 | 761 | 720 | 10 | 30 | 745 | 3.4 | 24.6 | 10.2 | Invention Example |
| 35 | 32 | 776 | 710 | 10 | 30 | 760 | 4.2 | 25.4 | 10.2 | Invention Example |
| 36 | 33 | 790 | 730 | 10 | 30 | 770 | 4.4 | 20.9 | 10.1 | Invention Example |
| 37 | 34 | 712 | 680 | 10 | 30 | 740 | 4.5 | 29.2 | 10.7 | Invention Example |
| 38 | 35 | 705 | 680 | 10 | 30 | 735 | 4.3 | 29.5 | 10.6 | Invention Example |
| 39 | 36 | 806 | 750 | 10 | 30 | 780 | 4.0 | 20.8 | 9.8 | Invention Example |
| 40 | 37 | 780 | 730 | 10 | 30 | 745 | 3.5 | 23.0 | 9.8 | Invention Example |
| 41 | 38 | 725 | 700 | 10 | 30 | 740 | 4.4 | 26.8 | 10.2 | Invention Example |
| 42 | 39 | 693 | 680 | 10 | 30 | 730 | 4.1 | 29.3 | 10.7 | Invention Example |
| 43 | 40 | 707 | 680 | 10 | 30 | 750 | 5.0 | 29.2 | 10.6 | Invention Example |
| 44 | 41 | 701 | 680 | 10 | 30 | 745 | 4.9 | 29.1 | 10.6 | Invention Example |
| 45 | 42 | 701 | 680 | 10 | 30 | 740 | 5.1 | 29.1 | 10.5 | Invention Example |
| 46 | 43 | 739 | 700 | 10 | 30 | 735 | 3.5 | 26.7 | 10.4 | Invention Example |
| 47 | 44 | 680 | 670 | 10 | 30 | 740 | 4.4 | 30.6 | 10.8 | Invention Example |
| 48 | 45 | 765 | 720 | 10 | 30 | 790 | 5.3 | 24.6 | 10.3 | Invention Example |
| 49 | 46 | 721 | 700 | 10 | 30 | 735 | 4.1 | 26.9 | 10.4 | Invention Example |
| 50 | 47 | 726 | 700 | 10 | 30 | 750 | 4.7 | 26.9 | 10.4 | Invention Example |
| 51 | 48 | 726 | 700 | 10 | 30 | 760 | 5.0 | 26.9 | 10.4 | Invention Example |
| 52 | 49 | 726 | 700 | 10 | 30 | 745 | 4.5 | 26.9 | 10.5 | Invention Example |
| 53 | 50 | 726 | 700 | 10 | 30 | 770 | 5.4 | 26.9 | 10.3 | Invention Example |
| 54 | 51 | 726 | 700 | 10 | 30 | 760 | 5.0 | 26.9 | 10.6 | Invention Example |

(continued)

| Steel Sheet No. | Steel No. | Finishing Annealing Conditions | | | | Strength Properties | | Iron Loss $W_{10/400}$(W/kg) | | Remarks |
| | | Temperature T(°C) | Annealing Temperature (°C) | Annealing Time(s) | Retention time(s) at 500°C or higher | Tensile Strength (MPa) | Dislocation Density ($\times 10^{14}m^{-2}$) | After Finishing Annealing | After Stress-relief Annealing | |
|---|---|---|---|---|---|---|---|---|---|---|
| 55 | 52 | 726 | 700 | 10 | 30 | 755 | 4.7 | 26.9 | 10.3 | Invention Example |
| 56 | 53 | 726 | 700 | 10 | 30 | 745 | 4.5 | 26.9 | 10.4 | Invention Example |
| 57 | 54 | 726 | 700 | 10 | 30 | 760 | 5.0 | 26.9 | 10.5 | Invention Example |
| 58 | 55 | 726 | 700 | 10 | 30 | 770 | 5.4 | 26.9 | 10.3 | Invention Example |
| 59 | 56 | 726 | 700 | 10 | 30 | 840 | 8.1 | 26.9 | 10.1 | Invention Example |

Next, samples for evaluation were collected from the product sheet(s) produced in the above manner and were each subjected to the following evaluation tests.

<Tensile test>

A JIS No.5 tensile test piece with a tensile direction being the rolling direction was collected from the abovementioned sample, and a tensile strength TS was measured in accordance with JIS Z 2241.

<Dislocation density measurement>

A 25 mm×30 mm test piece was collected from the abovementioned sample, and the surface on one side of the test piece was subjected to mechanical polishing and chemical polishing so as to reduce the thickness of the sheet to the central portion of the sheet thickness, followed by performing X-ray diffraction on such polished surface to measure the half-value widths of the peaks, and then using the Williamson-Hall method to calculate the dislocation density.

<Magnetic properties>

A test piece having a size of width: 30 mm × length: 280 mm was collected from the above sample in such a way that the test piece was collected from the L-direction (rolling direction) and the C-direction (direction perpendicular to rolling direction). The test piece collected was subjected to iron loss $W_{10/400}$ measurement in accordance with JIS C2550-1. Further, after performing a heat treatment simulating a stress-relief annealing (SRA: Stress-relief annealing) that is conducted at 800°C for 2 hours under a $N_2$ atmosphere, the iron loss $W_{10/400}$ after stress-relief annealing was measured by the above method.

The results of the above evaluation tests are also shown in Table 2. As is clear from these results, the steel sheets of the invention examples that were manufactured under conditions conforming with those of the present invention each exhibited a dislocation density of $1.2\times10^{14}$ m$^{-2}$ or larger, a tensile strength of 700 MPa or more, and also a post-SRA iron loss value that was lower than the reference value ($W_{10/400}$: 11.5 W/kg), which indicated that the steel sheets of the invention examples had excellent magnetic properties. Here, in the case of a steel sheet No.28, since the temperature T defined by the formula (2) was 489°C which was lower than 500°C, it was a comparative example where the tensile strength of the steel sheet was out of the range of the present invention, and a deteriorated iron loss was also exhibited.

**Claims**

1.   A non-oriented electrical steel sheet having a chemical composition comprising C: 0.0050% by mass or less, Si: 2.0 to 5.0% by mass, Mn: 0.2 to 1.8% by mass, P: 0.020% by mass or less, S: 0.0050% by mass or less, Al: 0.5 to 2.5% by mass, N: 0.0050% by mass or less, Mo: 0.001 to 0.100% by mass, O: 0.0050% by mass or less, at least one of Sn and Sb: 0.02 to 0.10% by mass in total, and a balance being Fe and inevitable impurities, wherein
   when the contents (by mass%) of Si, Al, and Mn are expressed as [Si], [Al], and [Mn], respectively, these contents satisfy the following formula (1):

$$[Si] + [Al]/2.5 + [Mn]/4 \geq 2.72 \cdots (1);$$

   a tensile strength of the steel sheet is 700 to 950 MPa; and
   a dislocation density in a central portion of a sheet thickness of the steel sheet is $1.2\times10^{14}$ m$^{-2}$ or more.

2.   The non-oriented electrical steel sheet according to claim 1, further containing Ge: 0.0005 to 0.0100% by mass in addition to said chemical composition.

3.   The non-oriented electrical steel sheet according to claim 1 or 2, further containing, in addition to said chemical composition, a component(s) of at least one group selected from the following groups A to H,

   group A: 0.001 to 0.010% by mass of Zn,
   group B: 0.0001 to 0.0030% by mass of Pb,
   group C: 0.0010 to 0.0080% by mass in total of at least one of Ca, Mg, and REM,
   group D: 0.0005 to 0.0030% by mass in total of at least one of Ti, Nb, and V,
   group E: 0.01 to 0.40% by mass in total of at least one of Cr, Cu, and Ni,

group F: 0.0003 to 0.0040% by mass of B,
group G: 0.0005 to 0.0200% by mass in total of at least one of Co, W, and Ta,
group H: at least one of 0.0005 to 0.0100 % by mass of Ga and 0.001 to 0.010 % by mass of As.

4. A method for producing a non-oriented electrical steel sheet, comprising:

hot-rolling a steel slab having the chemical composition as set forth in any one of claims 1 to 3 to obtain a hot-rolled sheet;
subjecting the hot-rolled sheet to hot-band annealing;
performing cold rolling once or twice or more with intermediate annealing between each rolling to obtain a cold-rolled sheet having a final sheet thickness; and
subjecting the cold-rolled sheet to finishing annealing,
wherein a soaking temperature in the finishing annealing is not lower than 500°C but not higher than a temperature T (°C) defined by the following formula (2), the soaking temperature is held for a time period of no longer than 60 seconds, and a time period during which the temperature of the cold-rolled sheet remains at 500°C or higher is no longer than 100 seconds.

$$T = 184 \times ([Si] + [Al]/2.5 + [Mn]/4) \cdots (2)$$

## INTERNATIONAL SEARCH REPORT

| International application No. |
| --- |
| **PCT/JP2023/031709** |

**A. CLASSIFICATION OF SUBJECT MATTER**

*C21D 8/12*(2006.01)i; *C21D 9/46*(2006.01)i; *C22C 38/00*(2006.01)i; *C22C 38/60*(2006.01)i; *H01F 1/147*(2006.01)i
FI: C22C38/00 303U; C21D8/12 A; C21D9/46 501A; C22C38/60; H01F1/147 175

According to International Patent Classification (IPC) or to both national classification and IPC

**B. FIELDS SEARCHED**

Minimum documentation searched (classification system followed by classification symbols)

C21D8/12; C21D9/46; C22C38/00; C22C38/60; H01F1/147

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2021/084785 A1 (JFE STEEL CORPORATION) 06 May 2021 (2021-05-06) claims, paragraphs [0056]-[0065], in particular, table 1-3, no. 3-13, 15-18, 20-21, 24-25, 29-30, 32-48, 50-54, 56-60 | 3 |
| Y | | 3 |
| A | | 1-2, 4 |
| X | WO 2021/117325 A1 (JFE STEEL CORPORATION) 17 June 2021 (2021-06-17) claims, paragraph [0084], table 4-3, no. 61-62, 65-66 | 3 |
| Y | | 3 |
| A | | 1-2, 4 |
| X | WO 2018/221126 A1 (JFE STEEL CORPORATION) 06 December 2018 (2018-12-06) claims, paragraphs [0025]-[0046], table 1-1, steel plate no. 5-9, 20-21, table 1-2, steel plate no. 22, 27, 32, 34-35 | 1, 3 |
| Y | | 1-3 |
| A | | 4 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 October 2023** | **31 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
|---|
| **PCT/JP2023/031709** |

### C.    DOCUMENTS CONSIDERED TO BE RELEVANT

| Category* | Citation of document, with indication, where appropriate, of the relevant passages | Relevant to claim No. |
|---|---|---|
| X | WO 2013/046661 A1 (JFE STEEL CORPORATION) 04 April 2013 (2013-04-04) claims, paragraphs [0014]-[0041], table 1-1, no. 13-15, table 1-2, no. 32 | 1, 3 |
| Y | | 1-3 |
| A | | 4 |
| X | WO 2014/142149 A1 (JFE STEEL CORPORATION) 18 September 2014 (2014-09-18) claims, paragraphs [0017]-[0040], table 1-1, no. 18 | 1, 3 |
| Y | | 1-3 |
| A | | 4 |
| X | JP 2017-106059 A (NIPPON STEEL & SUMITOMO METAL CORP) 15 June 2017 (2017-06-15) claims, paragraphs [0021]-[0063], table 1, steel plate no. 27, 29-32 | 1, 3 |
| Y | | 1-3 |
| A | | 4 |
| X | JP 2019-504193 A (POSCO) 14 February 2019 (2019-02-14) claims, paragraphs [0013]-[0027], table 1, B1-B7 | 1, 3 |
| Y | | 1-3 |
| A | | 4 |
| Y | JP 2021-509447 A (POSCO) 25 March 2021 (2021-03-25) claims, paragraph [0022] | 2-3 |

Form PCT/ISA/210 (second sheet) (January 2015)

## INTERNATIONAL SEARCH REPORT
### Information on patent family members

International application No.

**PCT/JP2023/031709**

| Patent document cited in search report | | | Publication date (day/month/year) | Patent family member(s) | | | Publication date (day/month/year) |
|---|---|---|---|---|---|---|---|
| WO | 2021/084785 | A1 | 06 May 2021 | US | 2022/0375667 | A1 | |
| | | | | claims, paragraphs [0083]-[0090], table 1-3, no. 3-13, 15-18, 20-21, 24-25, 29-30, 32-48, 50-54, 56-60 | | | |
| | | | | EP | 4053302 | A1 | |
| | | | | KR | 10-2022-0054871 | A | |
| | | | | CN | 114555848 | A | |
| WO | 2021/117325 | A1 | 17 June 2021 | US | 2022/0372600 | A1 | |
| | | | | claims, paragraph [0124], table 4, no. 61-62, 65-66 | | | |
| | | | | EP | 4036257 | A1 | |
| | | | | CN | 114630918 | A | |
| | | | | KR | 10-2022-0062605 | A | |
| WO | 2018/221126 | A1 | 06 December 2018 | US | 2021/0159002 | A1 | |
| | | | | claims, paragraphs [0038]-[0075], table 1-1, steel plate no. 5-9, 20-21, table 1-2, steel plate no. 22, 27, 32, 34-35 | | | |
| | | | | EP | 3633059 | A1 | |
| | | | | KR | 10-2019-0142357 | A | |
| | | | | CN | 110678568 | A | |
| | | | | JP | 2018-204052 | A | |
| WO | 2013/046661 | A1 | 04 April 2013 | US | 2014/0345751 | A1 | |
| | | | | claims, paragraphs [0015]-[0043], table 1-1, no. 13-15, table 1-2, no. 32 | | | |
| | | | | EP | 2762591 | A1 | |
| | | | | KR | 10-2014-0044929 | A | |
| | | | | CN | 103827333 | A | |
| WO | 2014/142149 | A1 | 18 September 2014 | US | 2016/0020007 | A1 | |
| | | | | claims, paragraphs [0017]-[0049], table 1, no. 18 | | | |
| | | | | EP | 2975147 | A1 | |
| | | | | KR | 10-2015-0119304 | A | |
| | | | | CN | 105189800 | A | |
| JP | 2017-106059 | A | 15 June 2017 | (Family: none) | | | |
| JP | 2019-504193 | A | 14 February 2019 | US | 2018/0355450 | A1 | |
| | | | | claims, paragraphs [0025]-[0072], table 1, B1-B7 | | | |
| | | | | WO | 2017/099534 | A1 | |
| | | | | CN | 108368584 | A | |
| JP | 2021-509447 | A | 25 March 2021 | US | 2021/0062287 | A1 | |
| | | | | claims, paragraphs [0046]-[0047] | | | |
| | | | | EP | 3733916 | A1 | |
| | | | | KR | 10-2019-0078251 | A | |
| | | | | CN | 111527225 | A | |

Form PCT/ISA/210 (patent family annex) (January 2015)

**REFERENCES CITED IN THE DESCRIPTION**

**Patent documents cited in the description**

- JP 2005113185 A

- JP 2012149337 A